(19) Europäisches Patentamt
European Patent Office
Office européen des brevets

(11) Publication number : 0 337 405 B1

(12) # EUROPEAN PATENT SPECIFICATION

(45) Date of publication of patent specification : 21.06.95 Bulletin 95/25

(51) Int. Cl.[6] : G02F 1/35, C08F 220/34, B29C 71/00

(21) Application number : 89106433.9

(22) Date of filing : 11.04.89

(54) **Nonlinear optical medium with a stable noncentrosymmetric polymeric structure.**

(30) Priority : 14.04.88 US 181751

(43) Date of publication of application : 18.10.89 Bulletin 89/42

(45) Publication of the grant of the patent : 21.06.95 Bulletin 95/25

(84) Designated Contracting States : BE DE FR GB IT NL

(56) References cited :
EP-A- 0 293 870
EP-A- 0 294 706
US-A- 4 127 681
SPIE PROCEEDINGS MATERIALS AND TECHNOLOGIES FOR OPTICAL COMMUNICATIONS, Cannes, 19th-20th November 1987, vol 866, pp 99-103, ed. A.P. Brenac; C.P.J.M. van der Vorst et al.: "A model for poling by an electric field of acceptor-donor molecules in a liquid crystalline phase"

(56) References cited :
MACROMOLECULES, vol. 21, February 1988, pages 526-528; H.L. HAMPSCH et al.:"Orientation and second harmonic generation in doped polystyrene andpoly(methyl methacrylate) films"

(73) Proprietor : HOECHST CELANESE CORPORATION
Route 202-206 North
Somerville, N.J. 08876 (US)

(72) Inventor : Man, Hong-Tai
24 Hampton Court
Basking Ridge New Jersey (US)
Inventor : Yoon, Hyun-Nam
88 Colchester Road
New Providence New Jersey (US)

(74) Representative : von Kreisler, Alek, Dipl.-Chem. et al
Patentanwälte
von Kreisler-Selting-Werner
Postfach 10 22 41
D-50462 Köln (DE)

EP 0 337 405 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

It is known that organic and polymeric materials with large delocalized $\pi$-electron systems can exhibit nonlinear optical response, which in many cases is a much larger response than by inorganic substrates.

In addition, the properties of organic and polymeric materials can be varied to optimize other desirable properties, such as mechanical and thermoxidative stability and high laser damage threshold, with preservation of the electronic interactions responsible for nonlinear optical effects.

Thin films of organic or polymeric materials with large second order nonlinearities in combination with silicon-based electronic circuitry have potential as systems for laser modulation and deflection, information control in optical circuitry, and the like.

Nonlinear optical properties of organic and polymeric materials was the subject of a symposium sponsored by the ACS division of Polymer Chemistry at the 18th meeting of the American Chemical Society, September 1982. Papers presented at the meeting are published in ACS Symposium Series 233, American Chemical Society, Washington, D.C., 1983.

Of more specific interest with respect to the present invention embodiments is prior art relating to side chain liquid crystalline polymers, such as the five articles published on pages 275-368 of "Polymeric Liquid Crystals", edited by A. Blumstein (Plenum Publishing Corporation, New York 1985).

Makromol, 179, 2541(1978) by H. Finkelmann et al describes a model consideration for liquid crystalline polymers with side chain biphenyl groups as mesogenic entities.

J. Polym. Sci., 19, 1427(1981) by Paleos et al describes the synthesis of liquid crystalline polymers which are prepared by the interaction of poly(acryloyl chloride) with mesogenic compounds such as p-aminobiphenyl.

C.P.J.M. van der Vorst and S.J. Picken in SPIE Vol. 866, Materials and Technologies for Optical Communications (1987), page 99 disclose a process for the production of a nonlinear optical medium having a stable noncentrosymmetric orientation of polymer molecules which process comprises heating the polymer above the glass transition temperature and subsequently subjecting the polymer medium to an external electric field to induce noncentrosymmetry.

Other publications which describe polymers with side chain induced crystallinity include Polymer, 25, 1342(1984); Eur. Polym. J., 21, No. 7 645(1985); Polymer, 26, 615(1985); and references cited therein.

There is continuing interest in the theory and practice of polymers which are characterized by an oriented state of comb-like side chain structures.

There is also an increasing research effort to develop new nonlinear optical organic systems for prospective novel phenomena and devices adapted for laser frequency conversion, information control in optical circuitry, light valves and optical switches. The potential utility of organic materials with large second order and third order nonlinearities for very high frequency application contrasts with the bandwidth limitations of conventional inorganic electrooptic materials.

Accordingly, it is an object of this invention to provide a process for producing second order nonlinear optical media which have a stable noncentrosymmetric structure of side chain polymer molecules.

Other objects and advantages of the present invention shall become apparent from the accompanying description and example.

### DESCRIPTION OF THE INVENTION

One or more objects of the present invention are accomplished by the provision of a process for producing a second order nonlinear optical medium having a stable noncentrosymmetric orientation of polymer molecules, which process comprises (1) heating a film of a polymer with pendant side chains to a temperature of at least about the polymer glass transition temperature ($T_g$); (2) subjecting the polymer medium to an external electric field to induce noncentrosymmetry in the polymer medium by molecular orientation of the polymer side chains which exhibit second order nonlinear optical susceptibility; and (3) cooling the noncentrosymmetric polymer medium to a temperature between $T_g$ and 20°C to solidify the polymer medium while maintaining the electric field effect and the polymer molecular orientation, wherein the cooling step (3) extends over a period of time sufficient to achieve ordered thermal relaxation and stabilization of the induced second order properties in the oriented polymer medium.

The cooling step (3) of the process typically extends over a period between thirty minutes and 300 hours.

The glass transition temperature ($T_g$) of the polymer employed in the process is in the range between 60°C-250°C.

Polymers which are suitable for the process include those which are characterized by a recurring monomer

unit corresonding to the formula:

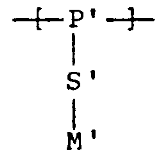

where P′ is a polymer main chain unit, S′ is a side chain flexible spacer group having a linear chain length of 1-20 atoms, M′ is a side chain pendant group which exhibits second order nonlinear optical susceptibility β, and where the recurring monomeric unit comprises at least 20 weight percent of the polymer, and the polymer has a glass transition temperature above 60°C.

Preferred polymers are those in which the pendant M′ group in the polymer side chain is a polar organic structure that has a dipole moment which is greater than 4 debye units.

Illustrative of a pendant M′ group in the polymer side chain is any one of the following structures:

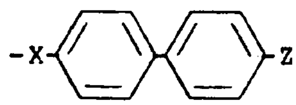

or

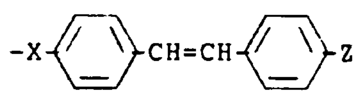

where X is -O-, -S-, -NR-,

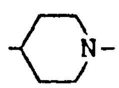

or

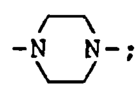

R is hydrogen or a $C_1$-$C_4$ alkyl substituent; and Z is $-NO_2$, -CN, $-CF_3$, $-SO_3CF_3$,

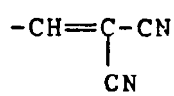

or

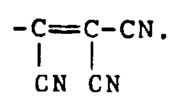

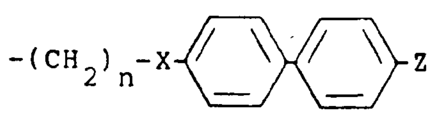

or

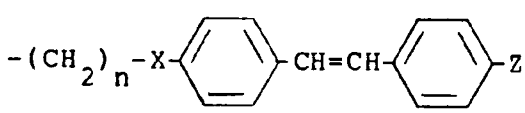

where n is an integer between 2-12, and X and Z are as defined above. The $-(CH_2)_n-$ radical corresponds to S′ in the polymer formula.

The polymer main chain can have a structure such as polyvinyl, polysiloxane, polyoxyalkylene, polyamide, polyester, and the like.

The side chain polymers illustrated above can be synthesized by procedures described in EP-A-0 294 706 and EP-A-0 297 530.

In another embodiment this invention provides a process for producing a second order nonlinear optical medium having a stable noncentrosymmetric molecular orientation of polymer molecules, which process comprises (1) heating a film of a polymer with pendant side chains to a temperature in the range between the polymer glass transition temperature ($T_g$) and 30°C; (2) subjecting the heated polymer medium to an external electric field to induce noncentrosymmetry in the polymer medium by molecular orientation of the polymer side chains which exhibit second order nonlinear optical susceptibility; and (3) maintaining the noncentrosymmetric polymer medium in solid form in the temperature range between $T_g$ and 30°C while maintaining the electric field effect and the polymer molecular orientation, wherein the maintaining step (3) extends over a period of time between about thirty minutes and 300 hours sufficient to allow ordered thermal relaxation so as to stabilize the induced second order properties in the oriented polymer medium.

The heating of the polymer medium in the above described process steps typically is in the range between $T_g$ and 0.5 $T_g$ (°C).

The maintaining step (3) of the process embodiment extends over a period between 0.1-60 hours.

The polymer film in the process has a thickness between 0.1-1000 micrometers.

In any of the process embodiments the external field is applied to the polymer film with a pair of electrodes having an operating voltage range between 10-1000 V/$\mu$m.

In another embodiment this invention provides a second order nonlinear optical medium comprising a stable noncentrosymmetric orientation of polymer molecules, wherein the polymer has side chains which exhibit second order nonlinear optical susceptibility, and wherein there is less than 10 percent loss of second order nonlinear optical activity exhibited by the medium when the medium is maintained at 50°C for one year.

This second order nonlinear optical medium can be used as optical light switch or light modulator device.

A present invention nonlinear optical device can be achieved by constructing one of the optical devices described in the technical literature, except that a present invention side chain polymer medium is utilized as the nonlinear optical component.

Optical harmonic generating devices are described in Science, <u>216</u> (1982); and in US-A-3,234,475; 3,395,329; 3,694,055; 3,858,124; and 4,536,450.

An optical interferometric waveguide gate device is described by A. Lattes et al in IEEE J. Quantum Electronics, <u>QE-19</u>(11), 1718 (1983).

A wide-band electrooptical guided-wave analog-to-digital converter device is described by R. A. Becker et al in Proceedings of the IEEE, <u>72</u>(7), 802 (1984).

Optical multiplexer-demultiplexer devices are described in US-A- 3,532,890; 3,755,676; 4,427,895; 4,455,643; and 4,468,776.

Optical bistable devices are described in US-A- 4,515,429 and 4,583,818; and by P. W. Smith et al in Applied Physics Letters, <u>30</u>(6); 280 (1977) and in IEEE Spectrum, June 1981.

Optical parametric devices are described in US-A- 3,371,220; 3,530,301; and 3,537,020.

<u>$\chi^{(2)}$ Relaxation Model</u>

A theoretical model for the $\chi^{(2)}$ relaxation of solid side chain polymers can be derived from a modified version of the William-Landel-Ferry (WLF) equation, and parameterized for temperatures below the glass transition temperature ($T_g$) of polymethyl methacrylate.

The empirical WLF equation is based on a free volume theory that assumes a linear dependence between the fractional free volume and temperature :

$$\log\frac{\tau(T)}{\tau(T_o)} = \frac{-C_1(T-T_o)}{C_2+(T-T_o)} \quad (1)$$

where $\tau$ is the relaxation time, $T_o$ is an arbitrary reference temperature such as the glass transition temperature ($T_g$), and $C_1$ and $C_2$ are constants having values of 17 and 52, respectively, which nominally are independent of polymer structure.

The WLF equation is valid for many polymer substrates above $T_g$. The WLF equation is not valid below $T_g$ because the non-equilibrium phase of a poled polymer medium-below $T_g$ is not factored into the WLF equation.

K.C.Rusch [J. of Macromol. Sci. Phys., <u>B2</u>(2), 179(1968)] extended the validity of the free volume concept to the less than $T_g$ region and derived a modified version of the WLF equation. It is assumed that in the glassy polymer state the free volume consists of an equilibium phase $v_f$ and a non-equilibrium phase $w_f$. If v(T) is the total free volume at temperature T:

$$v(T) = v_f(T) + w_f(T) \quad (2)$$

It is assumed also that the relaxation process is a direct and controlled function of free volume.

By cooling a poled polymer medium infinitely slow, a break in the volume-temperature curve is obtained

at a temperature $T_\infty$. At this transition temperature, the equilibrium free volume is considered to be zero. When the poled polymer medium is cooled at a finite rate, the corresponding transition temperature occurs at a higher temperature.

The modified WLF equation containing the non-equilibrium phase of the free volume is formulated by introducing an effective temperature for the non-equilibrium glassy polymer phase such that it represents the temperature at which the glassy polymer has an equilibrium free volume $v_f$ equal to the total volume $v_f + w_f$:

$$v_f(T) + w_f(T) = v_f(T_{eff}) \quad (3)$$

and the corresponding modified WLF equation then is represented as follows:

$$\log\frac{\tau(T)}{\tau(T_g)} = \frac{-C_1(T_{eff}-T_g)}{C_2+(T_{eff}-T_g)}$$

where $T_{eff} = T \qquad T \geqq T_g$

$$T_{eff} = T + \frac{w_f(T)}{\Delta\alpha} \qquad T_g \geqq T \geqq T_\infty$$

$$T_{eff} = T_\infty + \frac{w_f(T)}{\Delta\alpha} \qquad \text{otherwise}$$

and $\Delta\alpha$ is the difference in the thermal expansion coefficients above and below $T_g$.

The following kinetic equation can be utilized to describe the relation of free volumes in a poled side chain polymer medium:

$$\frac{dv(T,t)}{dt} = \frac{-w_f(T)}{\tau(w_f)} \quad (6)$$

This equation indicates that the rate of volume relaxation depends on:

(a) temperature;

(b) departure from equilibrium free volume; and

(c) size of free volume.

In accordance with the theoretical model as derived above, the initial fast decay of $\chi^{(2)}$ activity can be attributed to the relaxation of the largest free volumes. These free volumes are the furthest from the equilibrium, and therefore relax fastest as predicted by equation (6) above.

At the molecular level, for the free volume to change the polymer molecules must undergo a position adjustment. However, the rate at which the polymer molecules can adjust position is a sensitive function of free volume, and free volume itself is varying with time. Thus, after the initial fast decay of $\chi^{(2)}$ activity in a poled medium, the $\chi^{(2)}$relaxation rate due to the remaining "bulk" free volume becomes a predictable parameter by the modified WLF equation.

The experimental time constants, obtained from least-square fits, for two of the side chain polymers described in the Example are as follows:

B′/butyl methacrylate (25/75) $t_{long}$ = 4.1E2 min $\qquad T_g$= 68°C
B′/butyl methacrylate (50/50) $t_{long}$ = 6.2E4 min $\qquad T_g$ = 93°C
where B′ is N-methyl-4-[2-(4-nitrophenyl)ethenyl]phenylamino-2-ethyl-2-methyl-2-propenoate.

## Brief Description Of The Drawings

FIG. 1 is a graphical representation of the temperature versus time of the poling and quenching of a typical melted side chain polymer. As generally used herein, quenched polymers are those which are cooled from $T_g$ to room temperature in thirty minutes.

FIG.2 is a graphical representation of the temperature versus time of the poling, slow cooling, and annealing of a typical melted side chain polymer. Slow cooling to the annealing temperature is generally carried out at a rate of from 0.1 to 0.5°C per minute in accordance with the present invention.

FIG. 3 through FIG. 6 are graphical representations, respectively, of the $\chi^{(2)}$ decay versus time of poled,quenched and stored side chain polymers, and of poled, annealed and stored side chain polymers, as described in the Example.

The following Example is further illustrative of the present invention. The components and specific ingredients are presented as being typical, and various modifications can be derived in view of the foregoing disclosure within the scope of the invention.

## EXAMPLE

This Example illustrates process embodiments for the preparation of $\chi^{(2)}$ media with improved nonlinear optical stability in accordance with the present invention.

Sample Preparation

Samples are prepared by spin coating a solvent solution of a nonlinear optically responsive side chain polymer onto an ITO (indium-tin oxide) coated glass slide. The polymer layer is 2-5μm in thickness.

The ITO coating is an electrical conductor, and functions as one of the two electrodes required for molecular orientation of the polymer with an electric field. The second electrode is provided by the thermal evaporation of gold on the upper surface of the polymer layer. Lead wires are attached to the two electrodes.

Poling

A Mettler Heating Stage FP800 is used to control the temperature of the poling sample. The FP800 is programmed to control temperature ramp rates and annealing times. The poling field is generated with a Kepco OPS 3500 DC Power supply. A voltage of about 100 V/μm is applied to the sample.

$\chi^{(2)}$ Measurement

A sample is poled with the applied field, and a second harmonic intensity level is determined as a means of monitoring the degree of orientation alignment of the nonlinear optically responsive side chains of the polymer molecules.

The second harmonic intensity level is determined by directing an incident laser beam of 1.34μm perpendicular to a sample surface, and then transmitted radiation at twice the frequency (670μm) is measured at the other side of the sample.

The output second harmonic intensity from the polymer layer is a function of its second order nonlinear susceptibility $\chi^{(2)}$ which in turn is a function of the degree of alignment of the polymer side chains, i.e. of the degree of macroscopic noncentrosymmetry in the polymer layer. A completely random molecular orientation is centrosymmetric and nominally the second harmonic output is zero.

Nonlinear Optical Stability

The nonlinear optical stability of a poled sample is determined by monitoring the second harmonic output at the initial poling stage, and then at periodic time intervals during the cooling cycle under the electric field, and during the subsequent storage period at a given temperature.

The normalized $\chi^{(2)}$ relaxation curves for several side chain copolymers are determined. FIG. 3, FIG. 4, FIG. 5, and FIG. 6 represent plots of $\chi^{(2)}$ relaxation curves for polymers which are quenched after poling, or which are annealed after poling, while still subjected to the electric field effect. The storage temperature cycle is without the electric field effect to permit observation of nonlinear optical activity loss.

The B′/butyl methacrylate 50/50 copolymer I represented in FIG. 3 has a glass transition temperature ($T_g$) of 93°C, and corresponds to the formula:

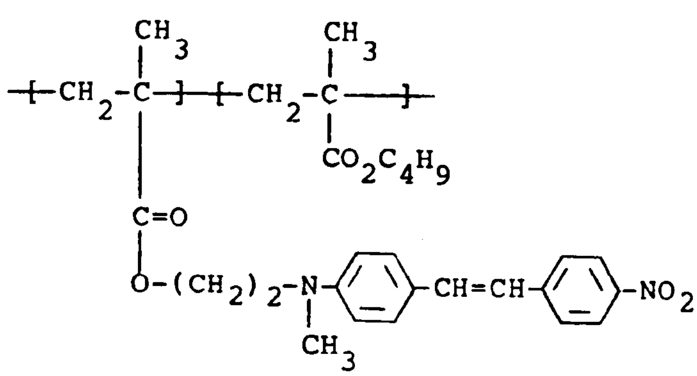

The B′/butyl methacrylate 25/75 copolymer II represented in FIG. 4 has a glass transition temperature ($T_g$) of 68°C, and corresponds to the FIG. 3 copolymer structure above except for the molar proportions of monomer units.

The B′/C′ 50/50 copolymer III as represented in FIG. 5 has a glass transition temperature ($T_g$) of 122°C, and corresponds to the formula:

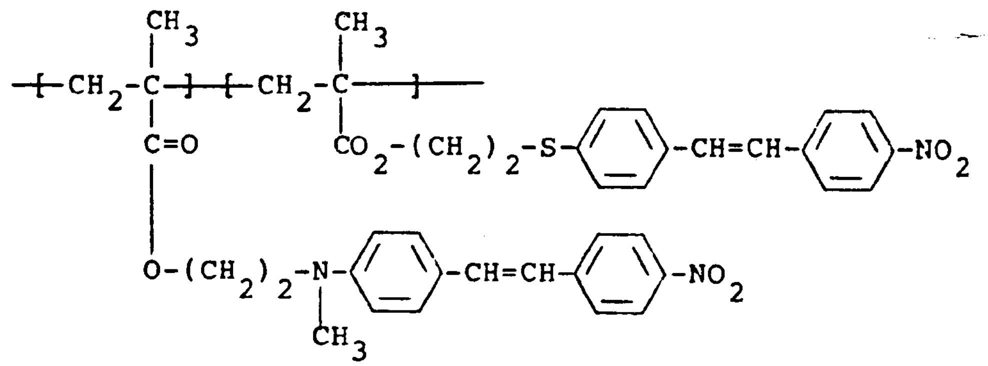

where C′ is 4-[2-(4-nitrophenyl)ethenyl]phenylthio-2-ethyl 2-methyl-2-propenoate.

The B′/methyl methacrylate 50/50 copolymer IV as represented in FIG. 6 has a glass transition temperature ($T_g$) of 135°C, and corresponds to the formula:

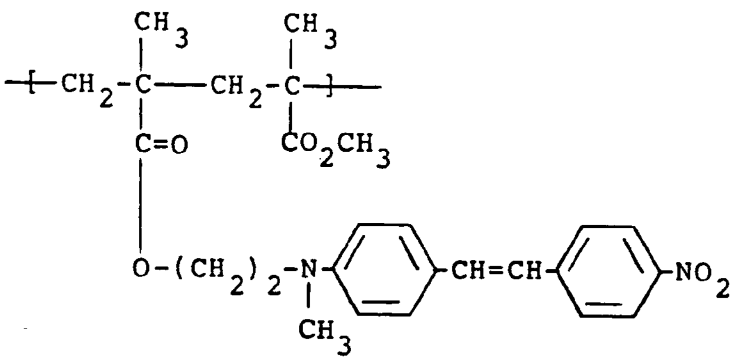

The figures demonstrate that a noncentrosymmetric side chain polymer medium has improved nonlinear optical stability if after poling and while maintaining the electric field effect the oriented polymer medium is annealed over a time period sufficient to achieve a thermal relaxation equilibrium in the oriented polymer medium.

## Claims

1. A process for producing a second order nonlinear optical medium having a stable noncentrosymmetric orientation of polymer molecules, which process comprises (1) heating a film of a polymer with pendant side chains to a temperature of at least about the polymer glass transition temperature $T_g$ ; (2) subjecting the polymer medium to an external electric field to induce noncentrosymmetry in the polymer medium by molecular orientation of the polymer side chains which exhibit second order nonlinear optical susceptibility; characterized in that (3) the noncentrosymmetric polymer medium is cooled to a temperature between $T_g$ and 20°C to solidify the polymer medium while maintaining the electric field effect and the polymer molecular orientation, wherein the cooling step (3) extends over a period of time sufficient to achieve ordered thermal relaxation and stabilization of the induced second order properties in the oriented polymer medium.

2. A process in accordance with claim 1 wherein the cooling step (3) extends over a period between thirty minutes and 300 hours.

3. A process in accordance with claim 1 wherein the glass transition temperature of the polymer is in the range between 60°C-250°C.

4. A process in accordance with claim 1 wherein the polymer is characterized by a recurring monomeric unit corresponding to the formula:

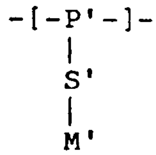

where P′ is a polymer main chain unit, S′ is a side chain flexible spacer group having a linear chain length of 1-20 atoms, M′ is a side chain pendant group which exhibits second order nonlinear optical susceptibility β, and where the recurring monomeric unit comprises at least 20 weight percent of the polymer, and the polymer has a glass transition temperature above 60°C.

**5.** A process in accordance with claim 4 wherein the pendant M′ group in the polymer side chain contains a biphenyl structure.

**6.** A process in accordance with claim 4 wherein the pendant M′ group in the polymer side chain has the following structure:

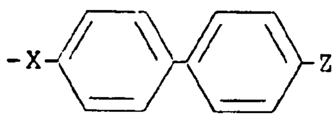

where X is -O-, -S-, -NR-,

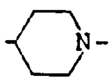 or 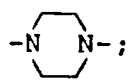;

R is hydrogen or a $C_1$-$C_4$ alkyl substituent; and Z is $-NO_2$, -CN, $-CF_3$, $-SO_3CF_3$,

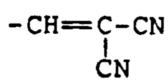 or 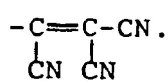.

**7.** A process in accordance with claim 4 wherein the pendant M′ group in the polymer side chain contains a stilbene structure.

**8.** A process in accordance with claim 4 wherein the pendant M′ group in the polymer side chain has the following structure:

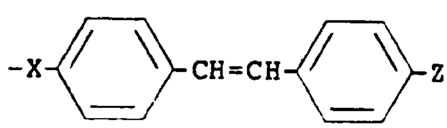

where X is -O-, -S-, -NR-,

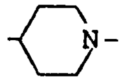 or 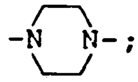;

R is hydrogen or a $C_1$-$C_4$ alkyl substituent; and Z is $-NO_2$, -CN, $-CF_3$, $-SO_3CF_3$,

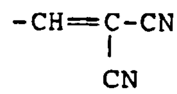 or 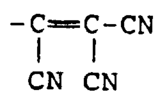.

**9.** A process in accordance with claim 4 wherein the S′ spacer group is $-(CH_2)_n-$, where n is an integer between 2-12.

**10.** A process in accordance with claim 4 wherein the polymer side chains contain the following structure:

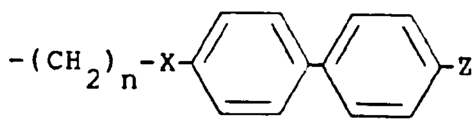

where n is an integer between 2-12, X is -O-, -S-, -NR-,

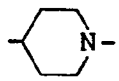 or 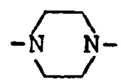;

R is hydrogen or a $C_1$-$C_4$ alkyl substituent; and Z is $-NO_2$, -CN, $-CF_3$, $-SO_3CF_3$,

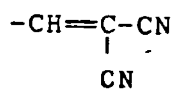 or 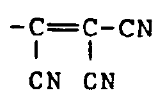.

**11.** A process in accordance with claim 4 wherein the polymer side chains contain the following structure:

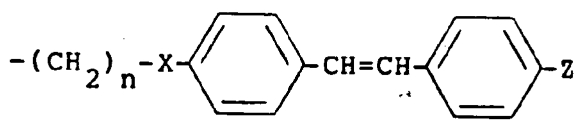

where n is an integer between 2-12, X is -O-, -S-, -NR-,

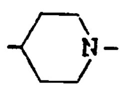 or 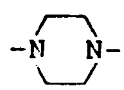;

R is hydrogen or a $C_1$-$C_4$ alkyl substituent; and Z is $-NO_2$, -CN, $-CF_3$, $-SO_3CF_3$,

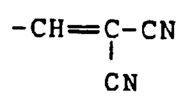 or 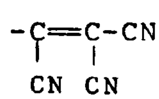.

**12.** A process in accordance with claim 4 wherein the polymer main chain is a polyvinyl structure.

**13.** A process in accordance with claim 4 wherein the polymer main chain is a polysiloxane structure.

**14.** A process in accordance with claim 4 wherein the polymer main chain is a polyoxyalkylene structure.

**15.** A process in accordance with claim 4 wherein the polymer main chain is a polyamide structure.

**16.** A process in accordance with claim 4 wherein the polymer main chain is a polyester structure.

**17.** A process for producing a second order nonlinear optical medium having a stable noncentrosymmetric molecular orientation of polymer molecules, which process comprises (1) heating a film of a polymer with pendant side chains to a temperature in the range between about the polymer glass transition temperature $T_g$ and 30°C; (2) subjecting the heated polymer medium to an external electric field to induce noncentrosymmetry in the polymer medium by molecular orientation of the polymer side chains which exhibit second order nonlinear optical susceptibility; and (3) maintaining the noncentrosymmetric polymer medium in solid form in the temperature range between $T_g$ and 30°C while maintaining the electric field effect and the polymer molecular orientation, wherein the maintaining step (3) extends over a period of time between thirty minutes and 300 hours sufficient to allow ordered thermal relaxation so as to stabilize the induced second order properties in the oriented polymer medium.

**18.** A process in accordance with claim 17 wherein the heating of the polymer medium in the process steps is at a temperature in the range between $T_g$ and 0.5 $T_g$ (°C).

**19.** A process in accordance with claim 17 wherein the maintaining step (3) extends over a period between 0.1-60 hours.

**20.** A process in accordance with claim 17 wherein the polymer film has a thickness between 0.1-1000 micrometers.

**21.** A process in accordance with claim 17 wherein the external field is applied to the polymer film with a pair of electrodes having an applied voltage between 10-1000 V/μm.

**22.** A process in accordance with claim 17 wherein the polymer is a polyacrylate or polymethacrylate polymer or copolymer which has pendant side chains which exhibit second order nonlinear optical susceptibility β, and the pendant side chains contain a biphenyl or stilbene structure.

## Patentansprüche

**1.** Verfahren zur Herstellung eines Mediums mit nichtlinearer Optik zweiter Ordnung mit einer stabilen nichtzentrosymmetrischen Ausrichtung von Polymermolekülen, umfassend: (1) Erwärmen eines Films aus einem Polymer mit anhängigen Seitenketten auf eine Temperatur von wenigstens etwa der Glasübergangstemperatur $T_g$ des Polymers; (2) Bringen des Polymermediums in ein äußeres elektrisches Feld, um in das Polymermedium durch molekulare Orientierung der Polymerseitenketten, die nichtlineare optische Suszeptibilität zweiter Ordnung zeigen, Nichtzentrosymmetrie einzuführen; dadurch gekennzeichnet, daß (3) das nichtzentrosymmetrische Polymermedium auf eine Temperatur zwischen $T_g$ und 20°C abgekühlt wird, um das Polymermedium zu verfestigen, während die Wirkung des elektrischen Feldes und die molekulare Orientierung des Polymers aufrechterhalten werden, wobei sich der Abkühlschritt (3) über einen Zeitraum erstreckt, der ausreicht, um eine geordnete thermische Relaxation und Stabilisierung der induzierten Eigenschaften zweiter Ordnung in dem ausgerichteten Polymermedium zu erreichen.

**2.** Verfahren gemäß Anspruch 1, wobei sich der Abkühlschritt (3) über einen Zeitraum zwischen dreißig Minuten und 300 Stunden erstreckt.

**3.** Verfahren gemäß Anspruch 1, wobei die Glasübergangstemperatur des Polymers im Bereich zwischen 60°C und 250°C liegt.

**4.** Verfahren gemäß Anspruch 1, wobei das Polymer durch eine sich wiederholende monomere Einheit gekennzeichnet ist, die der Formel:

```
- [-P'-] -
     |
     S'
     |
     M'
```

entspricht, worin P' eine Einheit der Polymerhauptkette ist, S' eine flexible Seitenkettenabstandsgruppe

mit einer linearen Kettenlänge von 1-20 Atomen ist, M′ eine an der Seitenkette hängende Gruppe ist, die nichtlineare optische Suszeptibilität zweiter Ordnung β zeigt, und wobei die sich wiederholende monomere Einheit wenigstens 20 Gew.-% des Polymers umfaßt und das Polymer eine Glasübergangstemperatur von über 60°C hat.

**5.** Verfahren gemäß Anspruch 4, wobei die anhängige Gruppe M′ in der Polymerseitenkette eine Biphenylstruktur enthält.

**6.** Verfahren gemäß Anspruch 4, wobei die anhängige Gruppe M′ in der Polymerseitenkette die folgende Struktur hat:

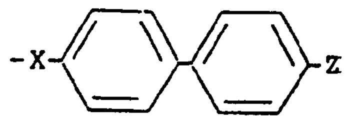

worin X -O-, -S-, -NR-,

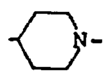 oder 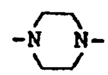

ist, R Wasserstoff oder ein $C_1$-$C_4$-Alkylsubstituent ist und z $-NO_2$, -CN, $-CF_3$, $-SO_3CF_3$,

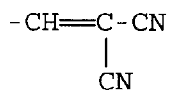 oder 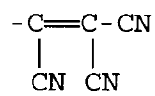

ist.

**7.** Verfahren gemäß Anspruch 4, wobei die anhängige Gruppe M′ in der Polymerseitenkette eine Stilbenstruktur enthält.

**8.** Verfahren gemäß Anspruch 4, wobei die anhängige Gruppe M′ in der Polymerseitenkette die folgende Struktur hat:

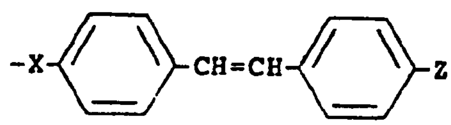

worin X -O-, -S-, -NR-,

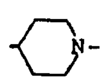 oder 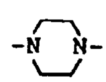

ist, R Wasserstoff oder ein $C_1$-$C_4$-Alkylsubstituent ist und z $-NO_2$, -CN, $-CF_3$, - $SO_3CF_3$,

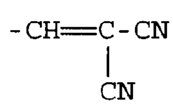 oder 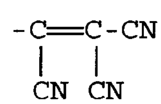

ist.

**9.** Verfahren gemäß Anspruch 4, wobei die Abstandsgruppe S′ $-(CH_2)_n-$ ist, wobei n eine ganze Zahl von 2 bis 12 ist.

**10.** Verfahren gemäß Anspruch 4, wobei die Polymerseitenketten die folgende Struktur enthalten:

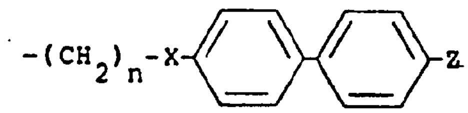

wobei n eine ganze Zahl von 2 bis 12 ist, X -O-, -S-, -NR-,

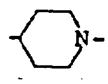 oder 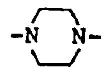

ist, R Wasserstoff oder ein $C_1$-$C_4$-Alkylsubstituent ist und Z $-NO_2$, -CN, $-CF_3$, $-SO_3CF_3$,

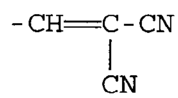 oder 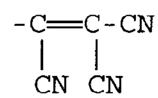

ist.

**11.** Verfahren gemäß Anspruch 4, wobei die Polymerseitenketten die folgende Struktur enthalten:

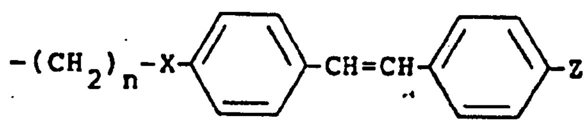

wobei n eine ganze Zahl von 2 bis 12 ist, X -O-, -S-, -NR-,

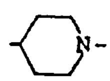 oder 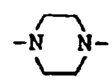

ist, R Wasserstoff oder ein $C_1$-$C_4$-Alkylsubstituent ist und Z $-NO_2$, -CN, $-CF_3$, $-SO_3CF_3$,

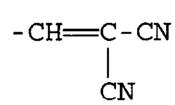 oder 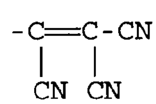

ist.

**12.** Verfahren gemäß Anspruch 4, wobei die Polymerhauptkette eine Polyvinylstruktur ist.

**13.** Verfahren gemäß Anspruch 4, wobei die Polymerhauptkette eine Polysiloxanstruktur ist.

**14.** Verfahren gemäß Anspruch 4, wobei die Polymerhauptkette eine Polyoxyalkylenstruktur ist.

**15.** Verfahren gemäß Anspruch 4, wobei die Polymerhauptkette eine Polyamidstruktur ist.

**16.** Verfahren gemäß Anspruch 4, wobei die Polymerhauptkette eine Polyesterstruktur ist.

**17.** Verfahren zur Herstellung eines Mediums mit nichtlinearer Optik zweiter Ordnung mit einer stabilen

nichtzentrosymmetrischen molekularen Ausrichtung von Polymermolekülen, umfassend (1) Erwärmen eines Films aus einem Polymer mit anhängigen Seitenketten auf eine Temperatur im Bereich zwischen etwa der Glasübergangstemperatur $T_g$ des Polymers und 30°C; (2) Bringen des erwärmten Polymermediums in ein äußeres elektrisches Feld, um in das Polymermedium durch molekulare Orientierung der Polymerseitenketten, die nichtlineare optische Suszeptibilität zweiter Ordnung zeigen, Nichtzentrosymmetrie einzuführen; und (3) Belassen des nichtzentrosymmetrischen Polymermediums in fester Form im Temperaturbereich zwischen $T_g$ und 30°C, während die Wirkung des elektrischen Feldes und die molekulare Orientierung des Polymers aufrechterhalten werden, wobei sich Schritt (3) über einen Zeitraum zwischen dreißig Minuten und 300 Stunden erstreckt, der ausreicht, um eine geordnete thermische Relaxation zu ermöglichen, um die induzierten Eigenschaften zweiter Ordnung in dem ausgerichteten Polymermedium zu stabilisieren.

**18.** Verfahren gemäß Anspruch 17, wobei das Erwärmen des Polymermediums in den Verfahrensschritten bei einer Temperatur im Bereich zwischen $T_g$ und 0,5 $T_g$ (°C) erfolgt.

**19.** Verfahren gemäß Anspruch 17, wobei sich Schritt (3) über einen Zeitraum zwischen 0,1 und 60 Stunden erstreckt.

**20.** Verfahren gemäß Anspruch 17, wobei der Polymerfilm eine Dicke zwischen 0,1 und 1000 µm hat.

**21.** Verfahren gemäß Anspruch 17, wobei das äußere Feld mit Hilfe eines Elektrodenpaars mit einer angelegten Spannung zwischen 10 und 1000 V/µm an den Polymerfilm angelegt wird.

**22.** Verfahren gemäß Anspruch 17, wobei das Polymer Polyacrylat- oder Polymethacrylatpolymer oder -Copolymer ist, das anhängige Seitenketten besitzt, die nichtlineare optische Suszeptibilität zweiter Ordnung β zeigen, und die anhängigen Seitenketten eine Biphenyl- oder Stilbenstruktur enthalten.

## Revendications

**1.** Procédé de production d'un milieu optique non linéaire de deuxième ordre, possédant une orientation non-centrosymétrique stable des molécules du polymère, procédé qui comprend les étapes consistant

(1) à chauffer un film d'un polymère, possédant des chaînes latérales appendues, à une température au moins approximativement égale à la température de transition vitreuse $T_g$ du polymère ; (2) à soumettre le milieu polymérique à un champ électrique extérieur pour induire une non-centrosymétrie dans le milieu polymérique par orientation moléculaire des chaînes latérales du polymère qui présentent une sensibilité optique non linéaire du deuxième ordre ; caractérisé en ce que (3) le milieu polymérique non-centrosymétrique est refroidi à une température comprise dans l'intervalle de $T_g$ à 20°C pour solidifier le milieu polymérique tout en maintenant l'effet de champ électrique et l'orientation moléculaire du polymère, l'étape de refroidissement (3) étant mise en oeuvre pendant un temps suffisant pour parvenir à une relaxation thermique ordonnée et une stabilisation des propriétés induites du deuxième ordre dans le milieu polymérique orienté.

**2.** Procédé suivant la revendication 1, dans lequel l'étape de refroidissement (3) est mise en oeuvre pendant un temps de trente minutes à 300 heures.

**3.** Procédé suivant la revendication 1, dans lequel la température de transition vitreuse du polymère est comprise dans l'intervalle de 60°C à 250°C.

**4.** Procédé suivant la revendication 1, dans lequel le polymère est caractérisé par un motif monomérique récurrent répondant à la formule :

$$\begin{array}{c} -[-P'-]- \\ | \\ S' \\ | \\ M' \end{array}$$

dans laquelle P′ représente un motif de chaîne principal du polymère, S′ représente un groupe d'espacement flexible de chaîne latérale possédant une longueur de chaîne linéaire de 1 à 20 atomes, M′ représente un groupe appendu de chaîne latérale qui présente une sensibilité optique non linéaire du deuxième ordre β, et dans lequel le motif monomérique récurrent représente au moins 20 pour cent en poids du polymère et le polymère possède une température de transition vitreuse supérieure à 60°C.

**5.** Procédé suivant la revendication 4, dans lequel le groupe M′ appendu dans la chaîne latérale du polymère contient une structure biphényle.

**6.** Procédé suivant la revendication 4, dans lequel le groupe M′ appendu dans la chaîne latérale du polymère possède la structure suivante :

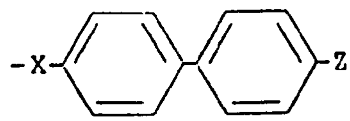

dans laquelle X représente -O-, -S-, un groupe -NR-,

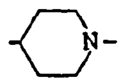

ou

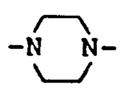 ;

R représente l'hydrogène ou un substituant alkyle en $C_1$ à $C_4$ ; et Z représente un groupe $-NO_2$, -CN, $-CF_3$, $-SO_3CF_3$,

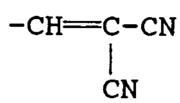 ou 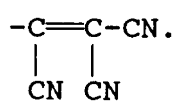 .

**7.** Procédé suivant la revendication 4, dans lequel le groupe M′ appendu dans la chaîne latérale du polymère contient une structure stilbène.

**8.** Procédé suivant la revendication 4, dans lequel le groupe M′ appendu dans la chaîne latérale du polymère possède la structure suivante :

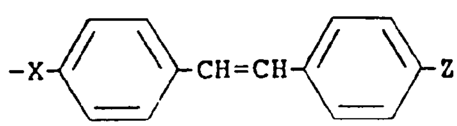

dans laquelle X représente -O-, -S-, un groupe -NR-,

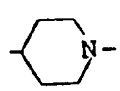

ou

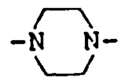 ;

R représente l'hydrogène ou un substituant alkyle en $C_1$ à $C_4$ ; et Z représente un groupe $-NO_2$, -CN, $-CF_3$, $-SO_3CF_3$,

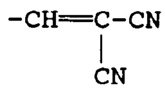 ou 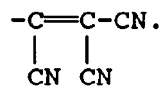

**9.** Procédé suivant la revendication 4, dans lequel le groupe d'espacement S' est un groupe $-(CH_2)_n-$, dans lequel n est un nombre entier de 2 à 12.

**10.** Procédé suivant la revendication 4, dans lequel les chaînes latérales du polymère contiennent la structure suivante :

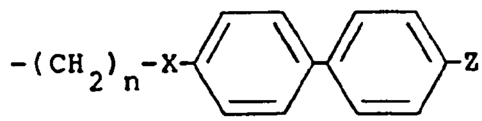

dans laquelle n est un nombre entier de 2 à 12, X représente -O-, -S-, un groupe -NR-,

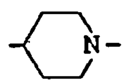 ou 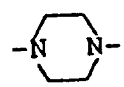 ;

R représente l'hydrogène ou un substituant alkyle en $C_1$ à $C_4$ ; et Z représente un groupe $-NO_2$, -CN, $-CF_3$, $-SO_3CF_3$,

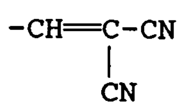

ou

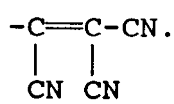

**11.** Procédé suivant la revendication 4, dans lequel les chaînes latérales du polymère contiennent la structure suivante :

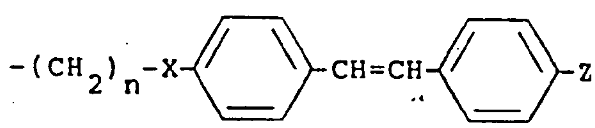

dans laquelle n est un nombre entier de 2 à 12, X représente -O-, -S-, un groupe -NR-,

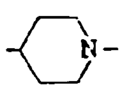 ou 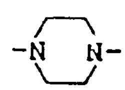 ;

R représente l'hydrogène ou un substituant alkyle en $C_1$ à $C_4$ ; et Z représente un groupe $-NO_2$, -CN, $-CF_3$, $-SO_3CF_3$,

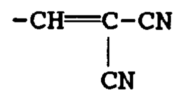

ou

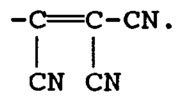

**12.** Procédé suivant la revendication 4, dans lequel la chaîne principale du polymère est une structure polyvinyle.

**13.** Procédé suivant la revendication 4, dans lequel la chaîne principale du polymère est une structure polysiloxane.

**14.** Procédé suivant la revendication 4, dans lequel la chaîne principale du polymère est une structure polyoxyalkylène.

**15.** Procédé suivant la revendication 4, dans lequel la chaîne principale du polymère est une structure polyamide.

**16.** Procédé suivant la revendication 4, dans lequel la chaîne principale du polymère est une structure polyester.

**17.** Procédé de production d'un milieu optique non linéaire du deuxième ordre possédant une orientation moléculaire non-centrosymétrique stable des molécules du polymère, procédé qui comprend les étapes consistant (1) à chauffer un film d'un polymère, possédant des chaînes latérales appendues, à une température comprise dans l'intervalle d'approximativement la température de transition vitreuse $T_g$ du polymère à 30°C ; (2) à soumettre le milieu polymérique chauffé à un champ électrique extérieur pour induire une non-centrosymétrie dans le milieu polymérique par orientation moléculaire des chaînes latérales du polymère qui présentent une sensibilité optique non linéaire du deuxième ordre ; et (3) à maintenir le milieu polymérique non-centrosymétrique sous une forme solide dans la plage de températures allant de $T_g$ à 30°C tout en maintenant l'effet de champ électrique et l'orientation moléculaire du polymère, dans lequel l'étape de maintien (3) est mise en oeuvre pendant un temps compris dans l'intervalle de trente minutes à 300 heures suffisant pour permettre une relaxation thermique ordonnée de manière à stabiliser les propriétés du deuxième ordre induites dans le milieu polymérique orienté.

**18.** Procédé suivant la revendication 17, dans lequel le chauffage du milieu polymérique dans les étapes de mise en oeuvre du procédé est effectué à une température comprise dans l'intervalle de $T_g$ à 0,5 $T_g$ (°C).

**19.** Procédé suivant la revendication 17, dans lequel l'étape de maintien (3) est mise en oeuvre pendant un temps de 0,1 à 60 heures.

**20.** Procédé suivant la revendication 17, dans lequel le film polymérique possède une épaisseur de 0,1 à 1000 micromètres.

**21.** Procédé suivant la revendication 17, dans lequel le champ extérieur est appliqué au film polymérique avec une paire d'électrodes ayant une tension appliquée de 10 à 1000 V/μm.

**22.** Procédé suivant la revendication 17, dans lequel le polymère est un polymère ou copolymère de polyacrylate ou polyméthacrylate qui possède des chaînes latérales appendues qui présentent une sensibilité optique non linéaire du deuxième ordre β, et les chaînes latérales appendues contiennent une structure biphényle ou stilbène.

# Fig.1

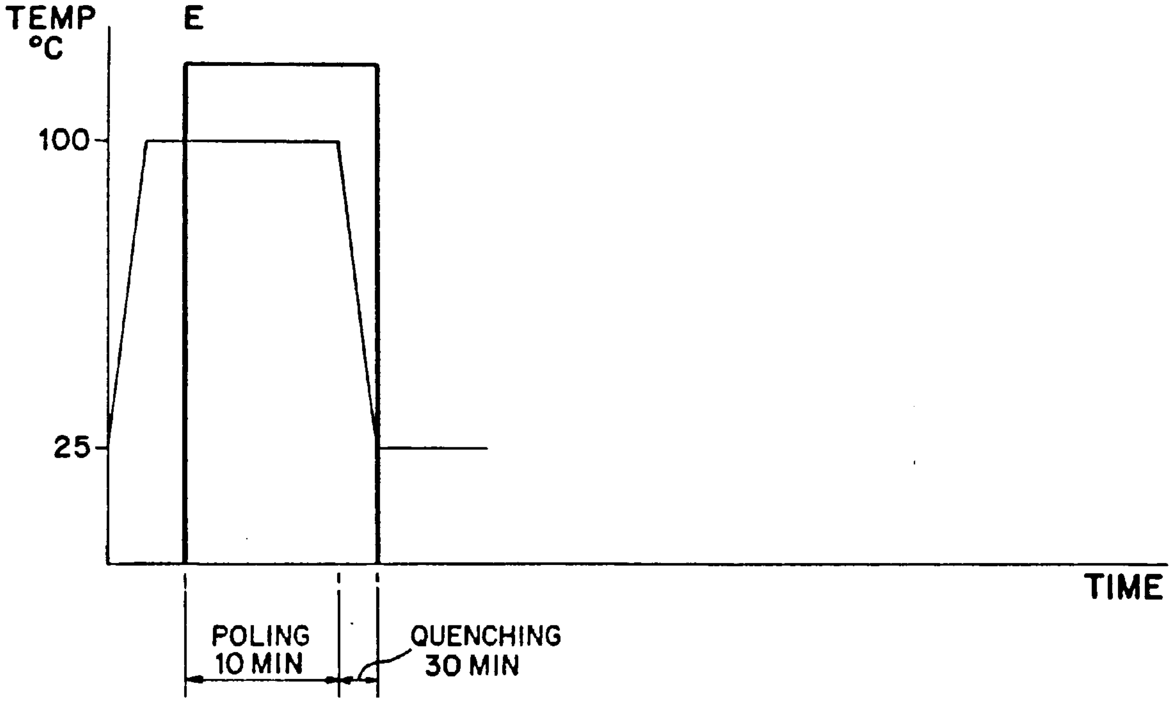
TEMP
°C
E
100
25
TIME
POLING
10 MIN
QUENCHING
30 MIN

# Fig.2

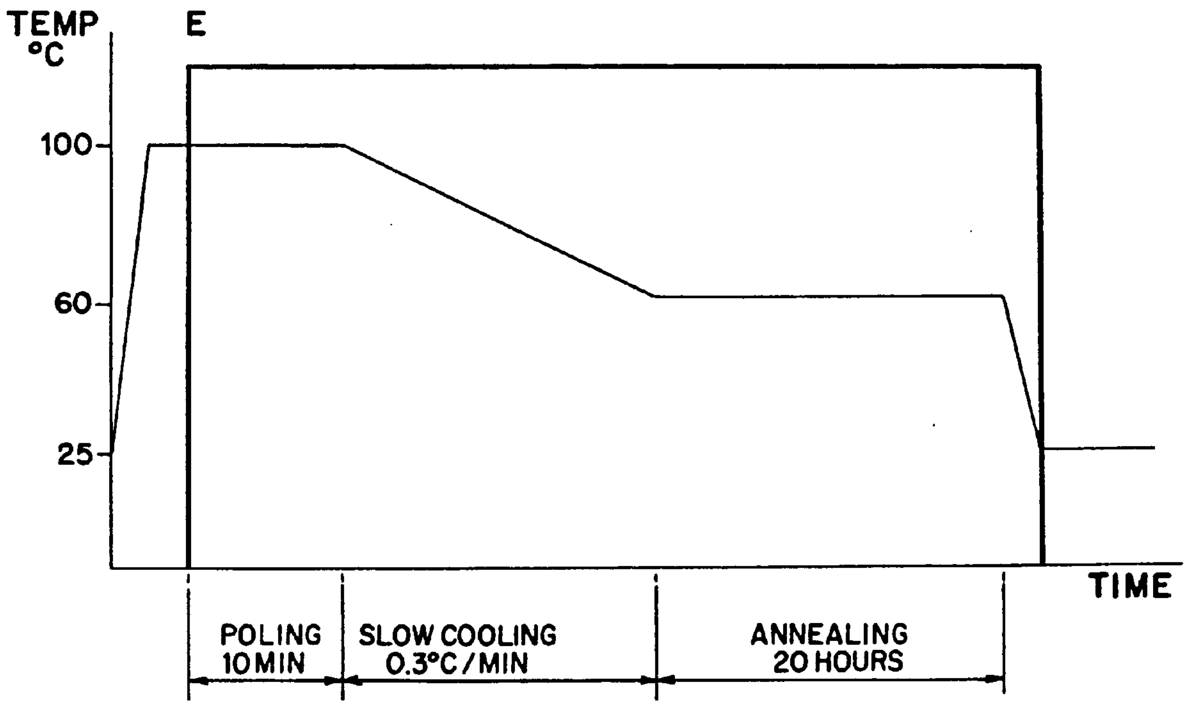
TEMP
°C
E
100
60
25
TIME
POLING
10 MIN
SLOW COOLING
0.3°C/MIN
ANNEALING
20 HOURS

Fig 3

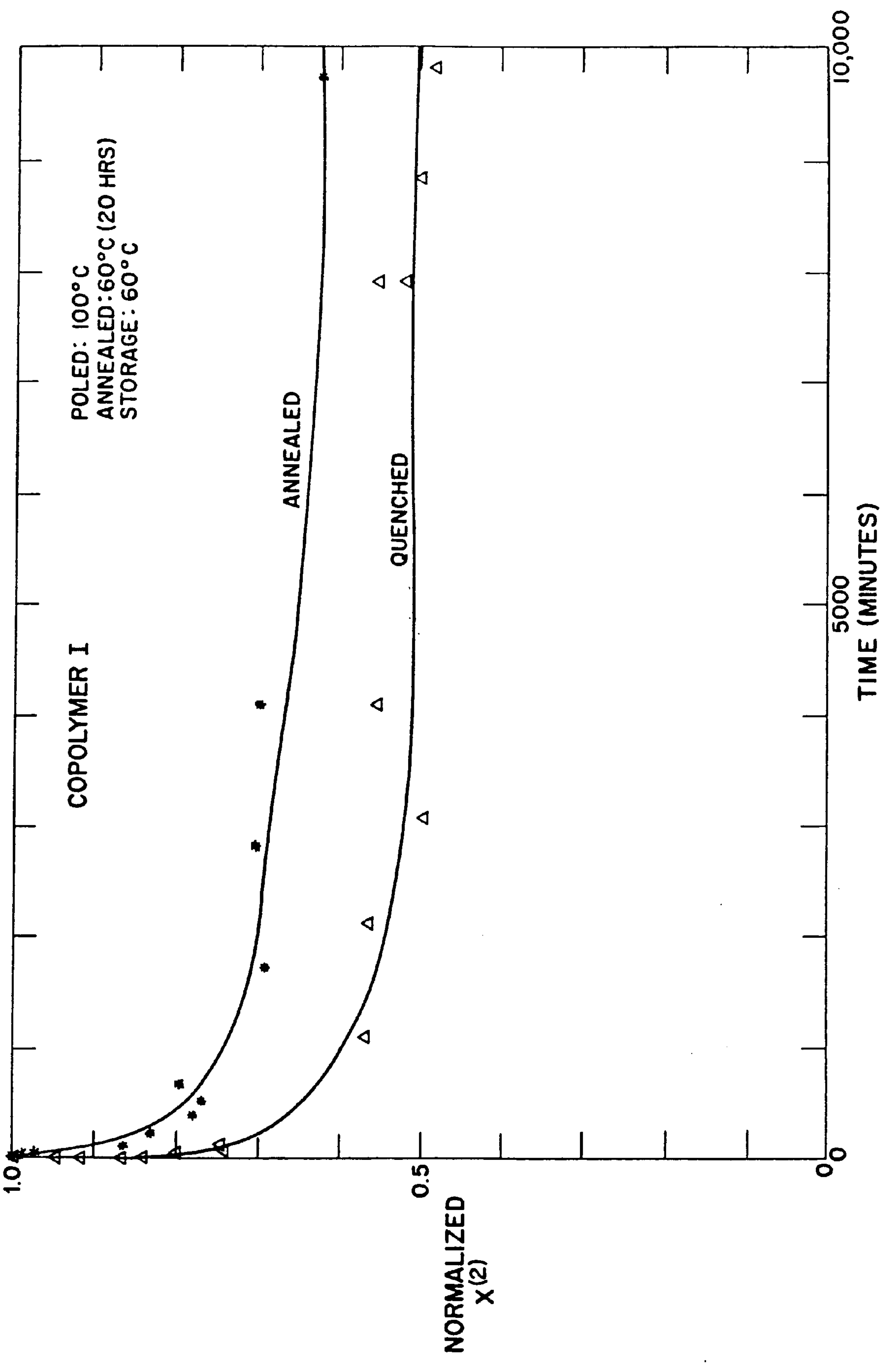
COPOLYMER I
POLED: 100°C
ANNEALED: 60°C (20 HRS)
STORAGE: 60°C
ANNEALED
QUENCHED
NORMALIZED
X(2)
1.0
0.5
0
5000
10,000
TIME (MINUTES)

Fig.4

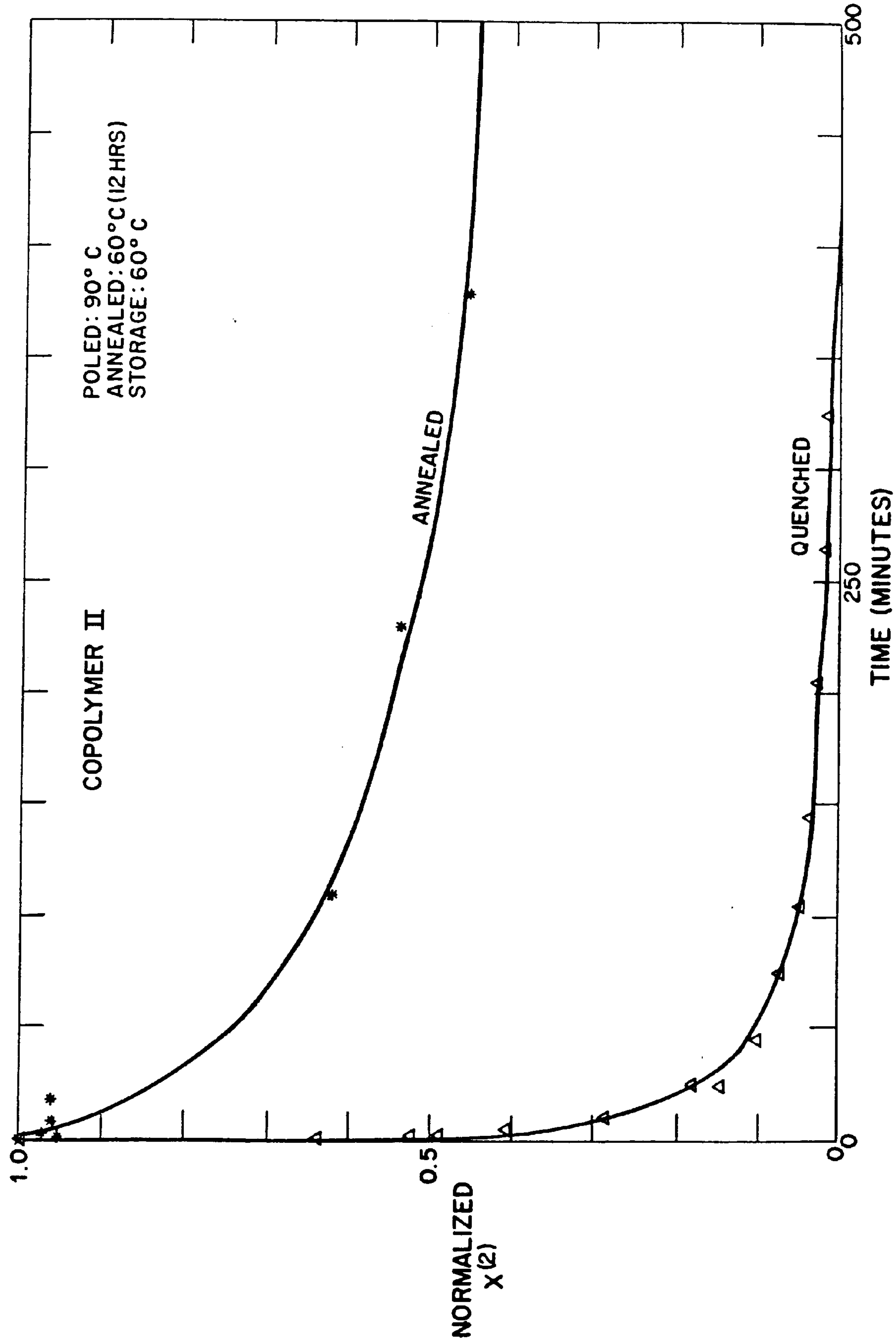
COPOLYMER II
POLED: 90° C
ANNEALED: 60°C (12 HRS)
STORAGE: 60° C
ANNEALED
QUENCHED
1.0
0.5
0
NORMALIZED
X(2)
0
250
500
TIME (MINUTES)

Fig 5

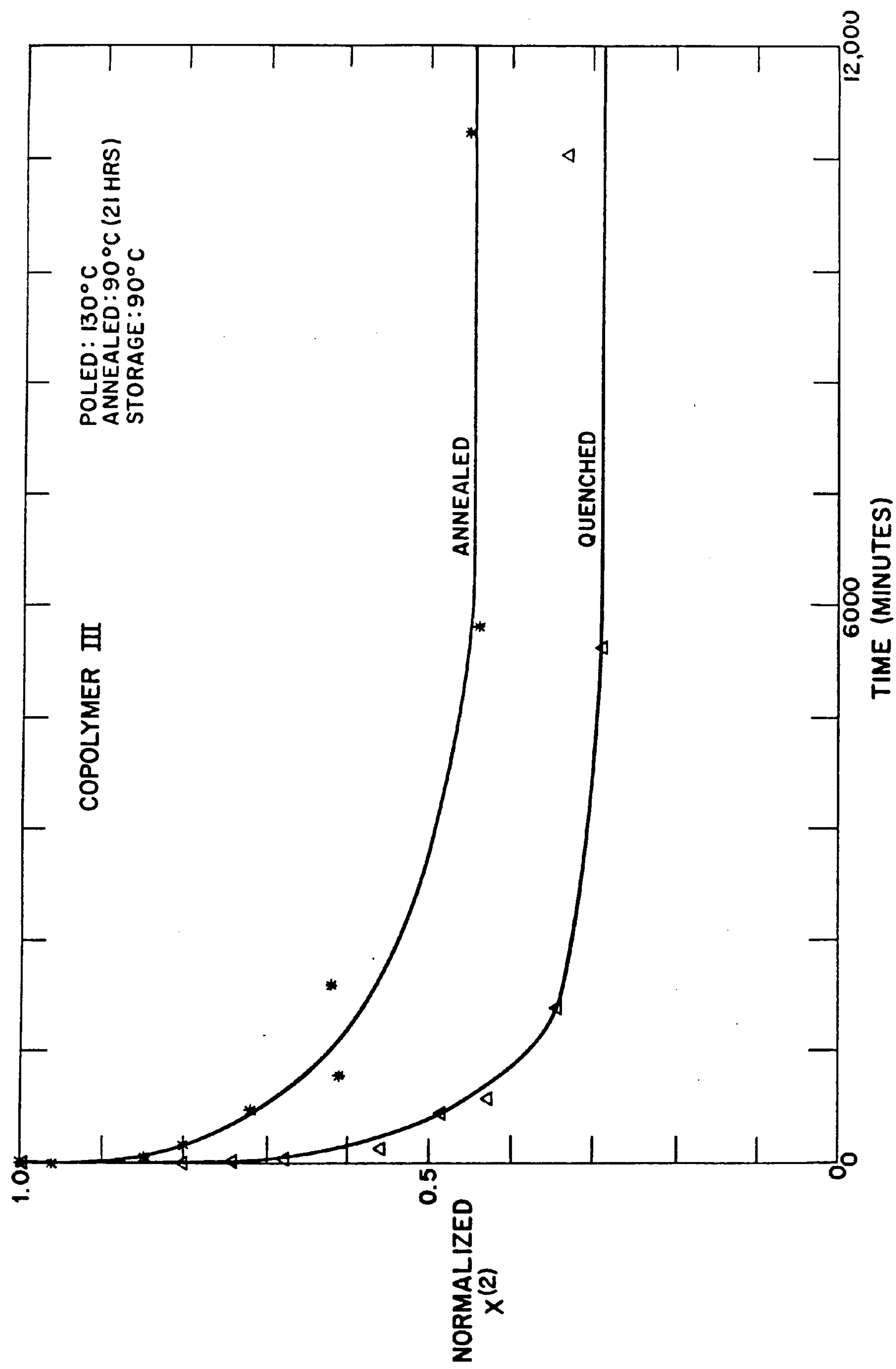
COPOLYMER III
POLED: 130°C
ANNEALED: 90°C (21 HRS)
STORAGE: 90°C
ANNEALED
QUENCHED
1.0
0.5
0
NORMALIZED
X(2)
0
6000
12,000
TIME (MINUTES)

Fig. 6

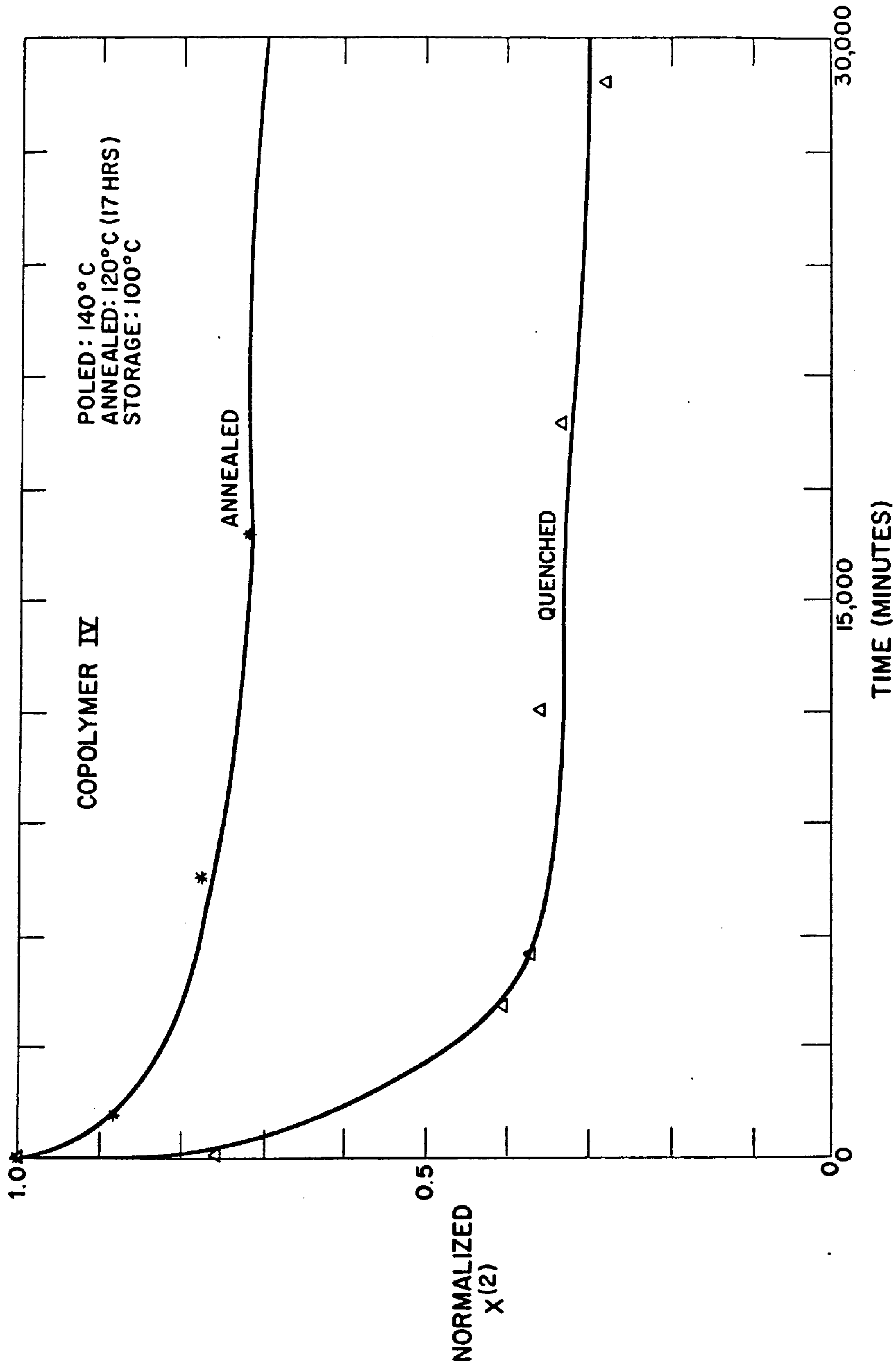
COPOLYMER IV
POLED: 140°C
ANNEALED: 120°C (17 HRS)
STORAGE: 100°C
ANNEALED
QUENCHED
NORMALIZED
X(2)
1.0
0.5
0
0
15,000
30,000
TIME (MINUTES)